**Europäisches Patentamt**

**European Patent Office**

**Office européen des brevets**

(19)

(11) Publication number: **0 204 373 B1**

# EUROPEAN PATENT SPECIFICATION

(12)

(45) Date of publication of patent specification:
**09.01.91 Bulletin 91/02**

(51) Int. Cl.⁵: **C08F 36/08, C08F 2/02**

(21) Application number: **86200943.8**

(22) Date of filing: **30.05.86**

(54) **Isoprene polymerisation process.**

The file contains technical information submitted after the application was filed and not included in this specification

(30) Priority: **05.06.85 IT 2103785**

(43) Date of publication of application:
**10.12.86 Bulletin 86/50**

(45) Publication of the grant of the patent:
**09.01.91 Bulletin 91/02**

(84) Designated Contracting States:
**BE DE FR GB NL**

(56) References cited:
**EP-A- 0 092 270**
**EP-A- 0 092 271**
**EP-A- 0 201 962**

(73) Proprietor: **ENICHEM ELASTOMERI S.p.A.**
**Via Ruggero Settimo 55**
**I-90139 Palermo (IT)**

(72) Inventor: **Carbonaro, Antonio**
**Via Marescalchi 1**
**I-20133 Milan (IT)**
Inventor: **Ferraro, Domenico**
**Via E. Fermi 18/B**
**I-20097 San Donato Milanese Milan (IT)**

(74) Representative: **Roggero, Sergio et al**
**Ing. Barzanò & Zanardo Milano S.p.A. Via Borgonuovo 10**
**I-20121 Milano (IT)**

EP 0 204 373 B1

## Description

This invention relates to a process for homopolymerizing isoprene in order to obtain a polyisoprene having a high content of "cis" isomer, a high molecular weight, and which is substantially gel-free.

It is known that, in the polymerization of conjugated diolefins, catalyst systems which contain, inter alia, metals of the lanthanide group are particularly active : this is disclosed in US-A-3 297 667, US-A-3 794 604, DE-A-28 30 080 and DE-A-28 48 964 : not all the disclosed compounds are stable or easily obtainable, and their preparation is often cumbersome.

EP-A-O 092 270 and EP-A-O 092 271 disclose a catalyst system compoed of : a) at least one element or compound of a Group III element ; b) at least one aluminium organic derivative ; c) at least one halogen compound, and d) at least one hydroxyl-containing compound.

The advantage of the latter system is that not only water, alcohols and carboxylic acids can be used, but they display a not negligible co-catalytic action.

The polymerization runs can be carried out also in the absence of solvents and diluents.

Practical experience has shown that it is generally advisable that the ratio of the component c) to the component a) should be greater than 0,1, that the ratio of the component d) to the component a) should be greater than 1, and that the mole ratio of the component b) to the component a) should be greater than 20.

Such a catalytic system has proven very effective in the polymerization of butadiene. When polymerizing butadiene, the difference between the polymerization in solution and the polymerization in the absence of diluents is not considerable. On the contrary, when isoprene is polymerized in the absence of diluents accordingto EP-A-O 092 270 and EP-A-O 092 271, it is not possible to prepare a high molecular weight polyisoprene and this is a shortcoming because the usual mechanical processing of polyisoprene reduces the molecular weight thereof. It has been surprisingly ascertained that, if the ratio of the aluminium compound to the compound of the Group III element, especially if the latter element is a lanthanide, does not exceed 20 :1, good results can be obtained in the polymerization of isoprene.

For this reason, the present invention proposes a process for homopolymerizing isoprene, wherein the process is carried out in the absence, or substantial absence, of diluents, by using a catalyst system composed of : a) neodymium oxide ; b) at least one organometallic alkyl-, cycloalkyl- of alkaryl substituted aluminium compound ; c) at least one compound selected from organic halogen derivatives, halides of elements capable of existing in at least two valency states with the halide corresponding to a valency state higher than the minimum, halogens and hydrogen halide acids, and d at least one hydroxyl-containing compound selected from the group consisting of water alcohols and carboxylic acids, characterized in that the molar ratio of aluminium to neodymium in the catalyst system never exceeds 20 :1, the homopolymerization reaction being carried out at a temperature of from 50°C to 75°C and for a time of from 10 min to 40 min.

By so doing, conversions to polyisoprene higher than 60% have been obtained, the homopolymers having a Mooney viscosity higher than 75, the polymerization times being shortened to from 10 to 40 min as compared with the from 4h to 5h of the prior art. The component c) of the catalyst system can be allyl chloride or bromide, crotyl chloride or bromide, methallyl chloride or bromide, benzyl chloride or bromide, tert.butyl chloride or bromide, methyl trichloride or tribromoacetate, butyl dichloroacetate and ethyl monochloroacetate, to cite but a few.

Halides of elements capable of existing in more than one valency state are, for example, tin tetrachloride, antimony pentachloride, phosphorus chlorides and bromides and others.

When the molar ratio of Al to Nd is 20 or less, it is preferred that the ratio c) :a) is from 1 to 3, and that the ratio d) :a) is from 3 to 10.

Water is poorly soluble in aliphatic hydrocarbons, but is fairly soluble in liquid diolefins. The preferred temperature range for homopolymerization is from 50°C to 75°C : this is because temperature has a bearing on the reaction kinetics, the average molecular weight, the distribution of the molecular weight and the content of "cis" isomer. The homopolymerization reaction can be carried out in conventional reactors if the desired conversion rating is 50% to 60%. If a higher conversion rating is desired, it is advisable to adopt single-screw, or twin-screw extrusion reactors.

The ensuing Examples are illustrative of the process according to the present invention ; they illustrate also, in some cases, how the catalyst system can be prepared.

## EXAMPLE 1 CATALYST PREPARATION

A Teflon(RTM)-coated metal anchor is placed in a strong-walled 100-ml glass bottle, whereafter the following ingredients are charged, in the order given :

2

| | | |
|---|---|---|
| $Nd_2O_3$ (commercial grade, 95% purity) | 4,04 g | |
| Naphthenic acids (acid value 200) | 19,8 g | |
| Paraffin oil (Vaseline (RTM) oil) | 45 ml | |

The bottle is stoppered by a perforated crown-cap having a neoprene gasket, and placed in a water-bath the temperature of which is controlled at 80°C. The metal anchor is driven to vigorous rotation by a rotary magnet. After 5 min, 0,08 ml of a 37% aqueous HCl solution is added to the reaction mixture by the hypodermic needle of a microsyringe. After about 20 additional min, the colour of the solution passes from grey to brown and water is concurrently formed : after a total reaction time of 2 h at 80°C, a viscous solution is obtained, which, upon cooling to ambient temperature, is slowly transferred under agitation to a glass flask containing 471 ml of a 0.97 molar solution of $(iC_4H_9)_2AlH$ (DIBAH) in paraffin oil preserved under an atmosphere of dry nitrogen.

After one hour, 8.5 ml of tert-butyl chloride are added dropwise to the same flask followed immediately by 5 ml of isoprene.

The catalytic solution obtained in this manner is left at ambient temperature for 24 hours prior to use, after which it is preserved under the same conditions. Elementary analysis shows the following molarities:

| | | |
|---|---|---|
| Nd | 0.0426 | moles/ℓ |
| Al | 0.849 | " |
| Cl | 0.126 | " |

Isoprene polymerisation

A cylindrical stainless steel autoclave disposed vertically and provided with a magnetically driven mechanical agitator, an upper condenser cooled to 0°C, and a jacket for electrical heating or cooling with water flowing along its wall, is put under vacuum by means of mechanical pump, after which 500 g (735 ml ca. abs. atm.) of isoprene are drawn in.

The autoclave is temperature controlled at 70°C (temperature of the agitated internal liquid) before feeding into it, by nitrogen pressure, 10.4 ml of the described catalytic solution in paraffin oil.

The heat of reaction is dissipated partly by internal cooling deriving from the boiling and reflux, and partly by heat transfer through the wall. The temperature of the polymerisation mass is kept between 70 and 75°C. Ten minutes after its commencement, the reaction is interrupted by rapid distillation of the unreacted monomer, which is collected in a cold bottle connected to the autoclave.

The polymer obtained is shredded and immersed in denatured ethyl alcohol containing 1% of dissolved AO 2246 for some hours, and is then dried under vacuum.

345 g (74,2% conversion) of a dry product are obtained with a 1,4 cis unit content, determined by $^{13}$C-NMR spectrography, of 97.1%, and a Mooney viscosity (1+4, 100°C) of 89.

EXAMPLE 2

The polymerisation described in Example 1 is repeated but with the following variations :
temperature 50°C (instead of 70°C)
13.5 ml of catalytic solution used (instead of 15.3).

The reaction under agitation was extended to 22 minutes, during which the temperature fluctuated between 50 and 58°C.

322 g (64.4% conversion) of dry polymer were obtained having a cis content of 97.8% and a Mooney viscosity of 85.

3

EXAMPLE 3

Catalyst preparation

The initial part of the preparation relating to the reaction at 80°C between $Nd_2O_3$ and naphthenic acids is carried out as described in Example 1.

The viscous solution is reacted under the indicated conditions with 373 ml of the 0.97 molar solution of DIBAH in oil and, after one hour, with 8.5 ml of tert-butyl chloride.

The catalyst prepared in this manner is left at ambient temperature for 24 hours prior to use. Elementary analysis shows the following concentrations :

| | | |
|---|---|---|
| Nd | 0.052 | moles / l |
| Al | 0.823 | " |
| Cl | 0.157 | " |

Isoprene polymerisation

A glass reactor of capacity 1 l is provided with a variable speed mechanical agitator and a steel top with a fitted valve, and into it are fed firstly the isoprene (300 g) and then, after heating to 70°C in a temperature controlled bath, 5.77 ml of the aforesaid catalytic solution.

The reaction is extended to 28 minutes, during which the temperature, measured internally by a thermocouple, fluctuates between 70 and 80°C.

The test is interrupted by discharging the product into 200 ml of ethyl alcohol containing 1% of antioxidant AO 2246.

The polymer is dried under vacuum at 30°C, to obtain 212 g of dry product (70.6% conversion).

The cis content is 97.7% and the Mooney viscosity 76.

EXAMPLE 4

Operating in a manner analogous to that described in Example 3, isoprene is polymerised with a smaller quantity of catalyst, namely 4.8 ml instead of 5.7 ml.

The reaction proceeds at 70-71°C for 40 minutes before interruption with alcohol. 182 g of dry polymer are obtained having a Mooney viscosity of 85.

**Claims**

1. A process for homopolymerizing isoprene, wherein the process is carried out in the absence, or substantial absence, of diluents, by using a catalyst system composed of : a) neodymium oxide ; b) at least one organometallic alkyl-, cycloalkyl- of alkaryl substituted aluminium compound ; c) at least one compound selected from organic halogen derivatives, halides of elements capable of existing in at least two valency states with the halide corresponding to a valency state higher than the minimum, halogens and hydrogen halide acids, and d) at least one hydroxyl-containing compound selected from the group consisting of water, alcohols and carboxylic acids, characterized in that the molar ratio of aluminium to neodymium in the catalyst system never exceeds 20 :1, the homopolymerization reaction being carried out at a temperature of from 50°C to 75°C and for a time of from 10 min to 40 min.

**Ansprüche**

1. Verfahren zur Homopolymerisation von Isopren, worin das Verfahren in Abwesenheit oder wesentlicher Abwesengheit von Verdünnungmitteln unter Verwendung eines Katalysatorsystems ausgeführt wird, welches sich aus

a) Neodymoxid ;

b) mindestens einer organometallischen Alkyl-, Cycloalkyl- oder Alkaryl-substituierten Aluminiumverbindung ;

c) mindestens einer Verbindung, ausgewählt unter organischen Halogenderivaten, Halogeniden von Elementen, welche fähig sind, in mindestens zwei Valenzzuständen vorzuliegen, wobei das Halogenid einem Valenzzustand entspricht, der höher als das Minimum ist, Halogenen und Wasserstoffhalogenidsäuren, und

d) mindestens einer Hydroxyl-enthaltenden Verbindung, ausgewählt aus der Gruppe, bestehend aus Wasser, Alkololen und Carbonsäuren, zusammensetzt, dadurch gekennzeichnet, daß das Molverhältnis von Aluminium zu Neodym im Katalysatorsystem niemals 20 :1 überschreitet, welche Homopolymerisationsreaktion bei einer Temperatur von 50°C bis 75°C und während einer Dauer von 10 min bis 40 min ausgeführt wird.

**Revendications**

1. Procédé d'homopolymérisation de l'isoprène, qui est réalisé en l'absence ou pratiquement en l'absence de diluants, à l'aide d'un système catalytique constitué de :

a) de l'oxyde de néodyme,

b) au moins un dérivé organo-métallique de l'aluminium à substituant alkyle, cycloalkyle ou alkylaryle,

c) au moins un composé choisi parmi les dérivés halogénés organiques, les halogénures d'éléments susceptibles d'exister en au moins deux états de valence, lesdits halogénures correspondant à un état de valence supérieur à l'état de valence minimum, les halogènes et les acides halogènhydriques, et

d) au moins un composé hydroxylé choisi dans le groupe constitué par l'eau, les alcools et les acides carboxyliques, **caractérisé** en ce que le rapport molaire de l'aluminium au néodyme dans le système catalytique ne dépasse jamais 20 :1, la réaction d'homopolymérisation étant effectuée à une température située dans l'intervalle allant de 50°C à 75°C et pendant une durée de 10 minutes à 40 minutes.